# EUROPÄISCHE PATENTSCHRIFT

(11) **EP 3 346 838 B1**
(45) Veröffentlichungstag und Bekanntmachung des Hinweises auf die Patenterteilung: **24.06.2020**
(21) Anmeldenummer: 16760652.4
(22) Anmeldetag: 29.08.2016
(51) Int. Cl.: A01N 43/80, A01N 39/00, A01P 1/00, A01N 31/04

(54) **LAGERSTABILE BIOZIDZUSAMMENSETZUNG**
STORAGE-STABLE BIOCIDAL COMPOSITION
COMPOSITION BIOCIDE STABLE AU STOCKAGE

(30) Priorität: 09.09.2015 EP 15002635
(43) Veröffentlichungstag der Anmeldung: 18.07.2018
(73) Patentinhaber: THOR GmbH, 67346 Speyer (DE)
(72) Erfinder: BAUM, Rüdiger, 68809 Neulussheim (DE)
(86) Internationale Anmeldenummer: PCT/EP2016/001457
(87) Internationale Veröffentlichungsnummer: WO 2017/041878

(56) Entgegenhaltungen:
- EP-A1- 0 450 916
- EP-A1- 2 020 178
- EP-A2- 1 332 675
- WO-A1-2012/158425
- WO-A2-2009/053325
- DE-A1-102009 048 188
- US-A- 4 188 376

## Beschreibung

Die vorliegende Erfindung betrifft eine lagerstabile Biozidzusammensetzung, welche die Komponenten: (a) 2 Gew.-% bis 20 Gew.-% eines oder mehrere Isothiazolinone, ausgewählt aus der Gruppe bestehend aus Methylisothiazolin-3-on (MIT) und 1,2-Benzisothiazolin-3-on (BIT), (b) 65 Gew.-% bis 97 Gew.-% wenigstens eines Biozids, ausgewählt aus der Gruppe Phenoxyethanol, Phenethylalkohol und Phenylpropanol und (c) 5 Gew.-% bis 10 Gew.-% Wasser enthält. Die Erfindung betrifft ferner die Verwendung der Zusammensetzung zum Schutz von technischen Materialien vor Befall und/oder Zerstörung durch Mikroorganismen.

Mischungen aus 1,2-Benziosthiazolin-3-on, nachfolgend auch als BIT bezeichnet, und Methylisothiazolin-3-on, nachfolgend auch als MIT bezeichnet, sind beispielsweise aus der Internationalen Patentanmeldung WO 99/08530 A1 bekannt. Diese werden aufgrund ihrer bakteriziden und fungiziden Eigenschaften in der Technik häufig als Biozid zum Schutz wässriger Medien und wasserenthaltender technischer Produkte gegen mikrobiellen Befall verwendet.

Da MIT- und BIT-haltige Biozidzusammensetzungen meist in Form eines Konzentrates den zu schützenden Medien oder technischen Produkten hinzugegeben werden, ist es wünschenswert, dass die Zusammensetzungen in Form von konzentrierten, flüssigen sowie lagerstabilen Zusammensetzungen verfügbar sind.

Im Zusammenhang mit der Stabilität von Isothiazolinonkonzentraten werden in der europäischen Offenlegungsschrift EP 0 450 916 A1 stabilisierte Isothiazolinonzusammensetzungen vorgeschlagen, welche als Isothiazolinone bevorzugt 5-Chlor-2-methyl-3-Isothiazolon, 2-Methyl-3-isothiazolon, 2-Octyl-3-isothiazolon, 4,5-Dichlor-2-cyclohexyl-3-isothiazolon und 4,5-Dichlor-2-octyl-3-isothiazolon enthalten, die mit Hilfe eines Phenoxyalkanols, vorzugsweise Phenoxyethanol, stabilisiert sind. Die Zusammensetzungen nach EP 0 450 916 A1 enthalten vorzugsweise weniger als 5 Gew.-% Wasser, ganz besonders bevorzugt enthalten die Zusammensetzungen kein Wasser. Hinsichtlich der Lagerstabilität weisen die Zusammensetzungen jedoch den Nachteil auf, dass sie bei kalten Wetterlagen, insbesondere bei niedrigen Temperaturen wie z. B. bei Werten von unter 5°C und/oder bei Temperaturbedingungen, die Frieren und Auftauen umfassen, zur Bildung von Niederschlägen und Ausfällungen neigen, was ein ernst zu nehmendes Handhabungsproblem darstellt.

Ausgehend von dem Stand der Technik lag der Erfindung dabei die Aufgabe zugrunde, fließfähige, lagerstabile biozide Zusammensetzungen mit einem Gehalt an Methylisothiazolin-3-on (MIT) und 1,2-Benziosthiazolin-3-on (BIT) zur Verfügung zu stellen.

Gelöst wird die Aufgabe durch eine lagerstabile Biozidzusammensetzung, welche die Komponenten:
(a) 2 Gew.-% bis 20 Gew.-% eines oder mehrerer Isothiazolinone, ausgewählt aus der Gruppe bestehend aus Methylisothiazolin-3-on (MIT) und 1,2-Benzisothiazolin-3-on (BIT),
(b) 65 Gew.-% bis 97 Gew.-% wenigstens eines Biozids ausgewählt aus der Gruppe Phenoxyethanol, Phenethylalkohol und Phenylpropanol und
(c) 5 Gew.-% bis 10 Gew.-% Wasser
enthält, beziehungsweise aus den Komponenten (a), (b) und (c) besteht. Die Zusammensetzung der vorliegenden Erfindung zeichnet sich durch ein breites Wirkspektrum aus und weist Lagerstabilität bei Temperaturen unter 5°C auf, die die früher erreichten Ergebnisse anderer Biozidzusammensetzungen übertrifft. In einer bevorzugten Ausführungsform der vorliegenden Erfindung ist die hier beschriebene antimikrobielle Zusammensetzung lagerstabil bei Temperaturen unter 5°C.

Gemäß einer weiteren Ausführungsform der Erfindung umfasst die Biozidzusammensetzung als weitere Komponente, Komponente (d) 0,1 Gew.-% bis 10 Gew.-% eines oder mehrerer Glykole, ausgewählt aus der Gruppe bestehend aus Monoethylenglykol, Diethylenglykol, Triethylenglykol, Propylenglykol, Tripropylenglykol, Dipropylenglykol und Mono- Di-, Tri- Tetra-Polyethylenglykol sowie deren Methyl- und Butylether. Die Anwesenheit der Komponente(n) (d) führt dabei zu einer noch weiter verbesserten Stabilität der erfindungsgemäßen Zusammensetzungen.

Die Biozidzusammensetzung enthält bevorzugt die folgenden Komponenten, beziehungsweise besteht aus den folgenden Komponenten:
(a) 2 Gew.-% bis 20 Gew.-% eines oder mehrerer Isothiazolinone, ausgewählt aus der Gruppe bestehend aus Methylisothiazolin-3-on (MIT) und 1,2-Benzisothiazolin-3-on (BIT),
(b) 65 Gew.-% bis 97 Gew.-% wenigstens eines Biozids ausgewählt aus der Gruppe Phenoxyethanol Phenethylalkohol und Phenylpropanol,
(c) 5 Gew.-% bis 10 Gew.-% Wasser und
(d) 0,1 Gew.-% bis 10 Gew.-% eines oder mehrerer Glykole ausgewählt aus der Gruppe bestehend aus Monoethylenglykol, Diethylenglykol, Triethylenglykol, Propylenglykol, Tripropylenglykol, Dipropylenglykol und Mono- Di-, Tri- Tetra-Polyethylenglykol sowie deren Methyl- und Butylether.

Gemäß einer bevorzugten Ausführungsform der Erfindung enthält die Biozidzusammensetzung als Komponente (d) Diethylenglykol und / oder Triethylenglykol. Gemäß einer besonders bevorzugten Ausführungsform der Erfindung enthält die Biozidzusammensetzung als Komponente (d) Diethylenglykol in einer Menge von 1 Gew.-% bis 5 Gew.-%, mehr bevorzugt in einer Menge von 1,5 Gew.-% bis 3 Gew.-%, bezogen auf die Biozidzusammensetzung.

Als Komponente (a) enthält die erfindungsgemäße Biozidzusammensetzung allgemein 2 Gew.-% bis 20 Gew.-%, bevorzugt 2 Gew.-% bis 10 Gew.-%, besonders bevorzugt 4 Gew.-% bis 8 Gew.-% eines oder mehrerer Isothiazolinone, ausgewählt aus der Gruppe bestehend aus Methylisothiazolin-3-on (MIT) und 1,2-Benzisothiazolin-3-on (BIT).

Gemäß einer bevorzugten Ausführungsform der Erfindung enthält die Biozidzusammensetzung als Komponente (a) 2 Gew.-% bis 20 Gew.-%, bevorzugt 2 Gew.-% bis 10 Gew.-%, besonders bevorzugt 4 Gew.-% bis 8 Gew.-% Methylisothiazolin-3-on und 1,2-Benzisothiazolin-3-on. Gemäß einer mehr bevorzugten Ausführungsform enthält die Biozidzusammensetzung als Isothiazolinone nur Methylisothiazolin-3-on und 1,2-Benzisothiazolin-3-on. Das Gewichtsverhältnis von Methylisothiazolin-3-on zu 1,2-Benzisothiazolin-3-on kann in einem breiten Bereich variieren, bevorzugt beträgt das Gewichtsverhältnis von Methylisothiazolin-3-on zu 1,2-Benzisothiazolin-3-on 1:10 bis 10:1, bevorzugt 1:5 bis 5:1, besonders bevorzugt 1:3 bis 3:1.

Als Komponente (b) enthält die erfindungsgemäße Biozidzusammensetzung allgemein 65 Gew.-% bis 97 Gew.-%, bevorzugt 75 Gew.-% bis 97 Gew.-%, besonders bevorzugt 80 Gew.-% bis 90 Gew.-% wenigstens eines Biozids, ausgewählt aus der Gruppe Phenoxyethanol, Phenetylalkohol und Phenylpropanol. "Wenigstens eines Biozids ausgewählt aus der Gruppe" bedeutet im Rahmen der vorliegenden Erfindung, dass die erfindungsgemäße Biozidzusammensetzung ein Biozid oder zwei Biozide oder drei Biozide ausgewählt aus der Gruppe Phenoxyethanol, Phenethylalkohol und Phenylpropanol enthält. Gemäß einer bevorzugten Ausführungsform der Erfindung enthält die erfindungsgemäße Biozidzusammensetzung allgemein 65 Gew.-% bis 97 Gew.-%, bevorzugt 75 Gew.-% bis 97 Gew.-%, besonders bevorzugt 80 Gew.-% bis 90 Gew.-% Phenoxyethanol.

Als Komponente (c) enthält die erfindungsgemäße Biozidzusammensetzung 5 Gew.-% bis 10 Gew.-%, mehr bevorzugt 5,5 Gew.-% bis 10 Gew.-%, besonders bevorzugt 7,5 Gew.-% bis 10 Gew.-% Wasser. Entgegen der Lehre von Dokument EP 0 450 916 A1, wonach Isothiazolinonkonzentrate, die mit Phenoxyethanol stabilisiert sind, weniger als 5 Gew.-% Wasser, oder bevorzugt kein Wasser enthalten sollen, stellte sich im Rahmen der Erfindung heraus, dass gerade der vorstehend definierte Anteil an Wasser entscheidend zur Lagerstabilität der erfindungsgemäßen Zusammensetzungen beiträgt.

Gemäß einer besonders bevorzugten Ausführungsform der Erfindung enthält die Biozidzusammensetzung die folgenden Komponenten, beziehungsweise besteht aus den folgenden Komponenten:
(aa) 2 Gew.-% Methylisothiazolin-3-on,
(ab) 2 Gew.-% 1,2-Benzisothiazolin-3-on,
(b) 87 Gew.-% Phenoxyethanol und
(c) 9 Gew.-% Wasser.

Gew.-% bis 90 Gew.-% wenigstens eines Biozids, ausgewählt aus der Gruppe Phenoxyethanol, Phenetylalkohol und Phenylpropanol. "Wenigstens eines Biozids ausgewählt aus der Gruppe" bedeutet im Rahmen der vorliegenden Erfindung, dass die erfindungsgemäße Biozidzusammensetzung ein Biozid oder zwei Biozide oder drei Biozide ausgewählt aus der Gruppe Phenoxyethanol, Phenetylalkohol Phenethylalkohol und Phenylpropanol enthält. Gemäß einer bevorzugten Ausführungsform der Erfindung enthält die erfindungsgemäße Biozidzusammensetzung allgemein 65 Gew.-% bis 97 Gew.-%, bevorzugt 75 Gew.-% bis 97 Gew.-%, besonders bevorzugt 80 Gew.-% bis 90 Gew.-% Phenoxyethanol.

Als Komponente (c) enthält die erfindungsgemäße Biozidzusammensetzung 5 Gew.-% bis 10 Gew.-%, mehr bevorzugt 5,5 Gew.-% bis 10 Gew.-%, besonders bevorzugt 7,5 Gew.-% bis 10 Gew.-% Wasser. Entgegen der Lehre von Dokument EP 0 450 916 A1, wonach Isothiazolinonkonzentrate, die mit Phenoxyethanol stabilisiert sind, weniger als 5 Gew.-% Wasser, oder bevorzugt kein Wasser enthalten sollen, stellte sich im Rahmen der Erfindung heraus, dass gerade der vorstehend definierte Anteil an Wasser entscheidend zur Lagerstabilität der erfindungsgemäßen Zusammensetzungen beiträgt.

Gemäß einer besonders bevorzugten Ausführungsform der Erfindung enthält die Biozidzusammensetzung die folgenden Komponenten, beziehungsweise besteht aus den folgenden Komponenten:
(aa) 2 Gew.-% Methylisothiazolin-3-on,
(ab) 2 Gew.-% 1,2-Benzisothiazolin-3-on,
(b) 87 Gew.-% Phenoxyethanol und
(c) 9 Gew.-% Wasser.

In einer besonders bevorzugten Ausführungsform der Erfindung enthält die erfindungsgemäße Biozidzusammensetzung neben den Isothiazolinonen und dem Phenoxyethanol keine weiteren Biozide.

Die erfindungsgemäße Biozidzusammensetzung eignet sich insbesondere zur Konservierung von technischen Materialien, die anfällig sind gegen den Befall durch Mikroorganismen.

Die Erfindung betrifft daher weiterhin die Verwendung der erfindungsgemäßen Biozidzusammensetzung zum Schutz von technischen Materialien vor Befall durch und der Bekämpfung von Mikroorganismen sowie ein Verfahren zum Schutz von technischen Materialien vor Befall und/oder Zerstörung durch Mikroorganismen, das dadurch gekennzeichnet ist, dass man die erfindungsgemäße Biozidzusammensetzung auf den Mikroorganismus oder dessen Lebensraum einwirken lässt. Die Einwirkung kann dabei in verdünnter oder unverdünnter Form erfolgen. Mikroorganismen im Sinne der Erfindung sind beispielsweise Bakterien, filamentöse Pilze und Hefen.

Die Erfindung betrifft zudem technische Materialien, erhältlich durch Behandlung von technischen Materialien mit der erfindungsgemäßen Biozidzusammensetzung. Bevorzugte technische Materialien sind wasserhaltige technische Produkte, wie Wasch- und Reinigungsmittel, Ligninsulfonate und Stärkepräparationen, sowie Anstrichmittel, wie Farben, Lacke, Lasuren und Putze, Emulsionen, Latices, Polymerdispersionen, Kreideaufschlämmungen, mineralische Slurrys, keramische Massen, Klebstoffe, Duftstoffe, kaseinhaltige Produkte, stärkehaltige Produkte, Bitumenemulsionen, Tensidlösungen, Kraftstoffe, Reinigungsmittel, Pigmentpasten und Pigmentdispersionen, Tinten, lithographische Flüssigkeiten, Verdicker, kosmetische Produkte, Toilettenartikel, Wasserkreisläufe, Flüssigkeiten bei der Papierverarbeitung, Flüssigkeiten bei der Holzverarbeitung, Flüssigkeiten bei der Erdölgewinnung, Flüssigkeiten bei der Lederherstellung, Flüssigkeiten bei der Textilherstellung, Bohr- und Schneidöle, hydraulische Flüssigkeiten und Kühlschmierstoffe.

Besonders bevorzugt wird die erfindungsgemäße Biozidzusammensetzung zur Konservierung von technischen Materialien, wie Wasch- und Reinigungsmitteln und Kühlschmierstoffen.

Die Anwendungskonzentration der erfindungsgemäßen Biozidzusammensetzung richtet sich nach der Art und dem Vorkommen der zu bekämpfenden Mikroorganismen, der mikrobiellen Ausgangsbelastung sowie nach der Zusammensetzung des zu schützenden technischen Materials. Die optimale Einsatzmenge für eine bestimmte Anwendung kann vor dem Praxiseinsatz in an sich und dem Fachmann hinlänglich bekannter Weise durch Testreihen im Labor einfach ermittelt werden.

Im Allgemeinen liegen die Anwendungskonzentrationen der erfindungsgemäßen Biozidzusammensetzung im Bereich von 0,01 Gew.-% bis 5 Gew.-%, bevorzugt im Bereich von 0,05 Gew.-% bis 1,0 Gew.-%, besonders bevorzugt im Bereich von 0,1 Gew.-% bis 0,5 Gew.-% der erfindungsgemäßen Biozidzusammensetzung, bezogen auf das zu schützende technische Material.

Die folgenden Beispiele dienen zur weiteren Veranschaulichung der vorliegenden Erfindung:

### Untersuchung der Lagerstabilität von Biozidzusammensezungen mit verschiedenen Wassergehalten

Zur Untersuchung der Lagerstabilität von Biozidzusammensetzungen mit einem Isothiazolinongehalt von 5 bis 6 Gew.-% und einem Gehalt an Phenoxyethanol wurden die in den nachfolgenden Tabellen charakterisierten Biozidzusammensetzungen mit verschiedenen Wassergehalten hergestellt und über einen Zeitraum von 24 Stunden bei 0°C bzw. 5°C gelagert.

Wie man den nachfolgend dargestellten Tabellen 1 bis 2 entnehmen kann, lassen sich bei tieferen Temperaturen lagerstabile Zusammensetzungen erst mit einem Wassergehalt zwischen 3 Gew.-% und 7,5 Gew.-% erhalten.

**Tabelle 1**

| Test: 24 Stunden bei 5°C | Wassergehalt [Gew.-%] | | | | | | |
|---|---|---|---|---|---|---|---|
| Konzentrationen [Gew.-%] | 0 | 1 | 2 | 3 | 5 | 7,5 | 10 |
| 5 MIT in PE | - | - | 0 | + | + | + | + |
| 5 BIT in PE | - | - | - | + | + | + | + |
| 2,5 MIT + 2,5 BIT in PE | - | - | 0 | + | + | + | + |
| 4 MIT + 2 BIT in PE | - | 0 | 0 | + | + | + | + |
| 2 MIT + 4 BIT in PE | - | - | - | - | 0 | + | + |

| | | | | | | | |
|---|---|---|---|---|---|---|---|
| MIT: Methylisothiazolin-3-on; BIT: 1,2-Benzisothiazolin-3-on, PE: Phenoxyethanol "0 = fast gelöst; "-" = gefroren; "+" = klar, gelöst | | | | | | | |

**Tabelle 2**

| Test: 24 Stunden bei 0°C | Wassergehalt [Gew.-%] | | | | | | |
|---|---|---|---|---|---|---|---|
| Konzentrationen [Gew.-%] | 0 | 1 | 2 | 3 | 5 | 7,5 | 10 |
| 5 MIT in PE | - | - | - | - | - | + | + |
| 5 BIT in PE | - | - | - | - | - | + | + |
| 2,5 MIT + 2,5 BIT in PE | - | - | - | - | - | + | + |
| 4 MIT + 2 BIT in PE | - | - | - | - | 0 | + | + |
| 2 MIT + 4 BIT in PE | - | - | - | - | 0 | + | + |

| | | | | | | | |
|---|---|---|---|---|---|---|---|
| MIT: Methylisothiazolin-3-on; BIT: 1,2-Benzisothiazolin-3-on, PE: Phenoxyethanol "0 = fast gelöst; "-" = gefroren; "+" = klar, gelöst | | | | | | | |

### Untersuchung der Lagerstabilität von Biozidzusammensezungen, die weiterhin die Komponente (d), wenigstens ein Glykol, enthalten:

Zur Untersuchung der Lagerstabilität von Biozidzusammensetzungen, die neben den Komponenten (a), (b) und (c), weiterhin wenigstens ein Glykol, Komponente (d) enthalten, wurden die in der nachfolgenden Tabelle 4 charakterisierten Biozidzusammensetzungen hergestellt und über einen Zeitraum von 24 Stunden bei -5°C gelagert.

Wie man der nachfolgend dargestellten Tabelle 3 entnehmen kann, sind die Biozidzusammensetzungen bei -5°C lagerstabil.

**Tabelle 3**

| Test: 24 Stunden bei -5°C | Bewertung |
|---|---|
| Konzentrationen [Gew.-%] | |
| 10 Wasser + 2 MIT + 2 BIT + 86 PE + 2 PEG 200 | + |
| 10 Wasser + 2 MIT + 2 BIT + 96 PE + 2 Monoethylenglycol | + |
| 10 Wasser + 2 MIT + 2 BIT + 96 PE + 2 Diethylenglycol | + |
| 10 Wasser + 2 MIT + 2 BIT + 96 PE + 2 Triethylenglycol | + |

| | |
|---|---|
| MIT: Methylisothiazolin-3-on; BIT: 1,2-Benzisothiazolin-3-on, PE: Phenoxyethanol "0 = fast gelöst; "-" = gefroren; "+" = klar, gelöst | |

## Patentansprüche

1. Biozidzusammensetzung, enthaltend die Komponenten:
(a) 2 Gew.-% bis 20 Gew.-% eines oder mehrerer Isothiazolinone, ausgewählt aus der Gruppe, bestehend aus Methylisothiazolin-3-on (MIT) und 1,2-Benzisothiazolin-3-on (BIT),
(b) 65 Gew.-% bis 97 Gew.-% wenigstens eines Biozids, ausgewählt aus der Gruppe Phenoxyethanol, Phenethylalkohol und Phenylpropanol und
(c) 5 Gew.-% bis 10 Gew.-% Wasser.

2. Biozidzusammensetzung nach Anspruch 1, **dadurch gekennzeichnet, dass** diese als Komponente (b) Phenoxyethanol enthält.

3. Biozidzusammensetzung nach Anspruch 1 oder 2, **dadurch gekennzeichnet, dass** sie weiterhin als Komponente
(d) 0,1 Gew.-% bis 10 Gew.-% eines oder mehrerer Glykole, ausgewählt aus der Gruppe, bestehend aus Monoethylenglykol, Diethylenglykol, Triethylenglykol, Propylenglykol, Tripropylenglykol, Dipropylenglykol und Mono- Di-, Tri- Tetra-Polyethylenglykol sowie deren Methyl- und Butylether enthät.

4. Biozidzusammensetzung nach Anspruch 3, **dadurch gekennzeichnet, dass** diese als Komponente (d) Diethylenglykol enthält.

5. Biozidzusammensetzung nach einem der Ansprüche 1 bis 4, **dadurch gekennzeichnet, dass** diese als Isothiazolinone nur Methylisothiazolin-3-on (MIT) und 1,2-Benzisothiazolin-3-on (BIT) enthält.

6. Biozidzusammensetzung nach einem der Ansprüche 1 bis 5, **dadurch gekennzeichnet, dass** diese als Komponente (c) 7,5 Gew.-% bis 10 Gew.-% Wasser enthält.

7. Biozidzusammensetzung nach einem der Ansprüche 1 bis 6, **dadurch gekennzeichnet, dass** diese das Methylisothiazolin-3-on (MIT) und das 1,2-Benzisothiazolin-3-on (BIT) in einem Verhältnis von 1:3 bis 3:1 enthält.

8. Biozidzusammensetzung nach einem der Ansprüche 1 bis 7, **dadurch gekennzeichnet, dass** diese aus folgenden Bestandteilen besteht:
(aa) 2 Gew.-% Methylisothiazolin-3-on,
(ab) 2 Gew.-% 1,2-Benzisothiazolin-3-on,
(b) 87 Gew.-% Phenoxyethanol und
(c) 9 Gew.-% Wasser.

9. Verwendung einer Biozidzusammensetzung nach einem der Ansprüche 1 bis 8 zum Schutz von technischen Materialien,
vor Befall durch und der nicht therapeutischen Bekämpfung von Mikroorganismen.

10. Verfahren zum Schutz von technischen Materialien vor Befall und/oder Zerstörung durch Mikroorganismen, **dadurch gekennzeichnet, dass** man eine Biozidzusammensetzung nach einem der Ansprüche 1 bis 9 auf den Mikroorganismus oder dessen Lebensraum einwirken lässt.

## Claims

1. Biocidal composition comprising the components:
(a) 2% by weight to 20% by weight of one or more isothiazolinones selected from the group consisting of methylisothiazolin-3-one (MIT) and 1,2-benzisothiazolin-3-one (BIT),
(b) 65% by weight to 97% by weight of at least one biocide selected from the group of phenoxyethanol, phenethyl alcohol and phenylpropanol and
(c) 5% by weight to 10% by weight water.

2. Biocidal composition according to Claim 1, **characterized in that** said composition comprises phenoxyethanol as component (b).

3. Biocidal composition according to Claim 1 or 2, **characterized in that** said composition further comprises as component
(d) 0.1% by weight to 10% by weight of one or more glycols selected from the group consisting of monoethylene glycol, diethylene glycol, triethylene glycol, propylene glycol, tripropylene glycol, dipropylene glycol and mono-, di-, tri-, tetra-polyethylene glycol and the methyl and butyl ethers thereof.

4. Biocidal composition according to Claim 3, **characterized in that** said composition comprises diethylene glycol as component (d).

5. Biocidal composition according to any of Claims 1 to 4, **characterized in that** said composition comprises only methylisothiazolin-3-one (MIT) and 1,2-benzisothiazolin-3-one (BIT) as isothiazolinones.

6. Biocidal composition according to any of Claims 1 to 5, **characterized in that** said composition comprises 7.5% by weight to 10% by weight water as component (c).

7. Biocidal composition according to any of Claims 1 to 6, **characterized in that** said composition comprises the methylisothiazolin-3-one (MIT) and the 1,2-benzisothiazolin-3-one (BIT) in a ratio from 1:3 to 3:1.

8. Biocidal composition according to any of Claims 1 to 7, **characterized in that** said composition consists of the following constituents:
(aa) 2% by weight methylisothiazolin-3-one,
(ab) 2% by weight 1,2-benzisothiazolin-3-one,
(b) 87% by weight phenoxyethanol and
(c) 9% by weight water.

9. Use of a biocidal composition according to any of Claims 1 to 8 for the protection of technical materials from infestation by, and the non-therapeutic control of, microorganisms.

10. Method for the protection of technical materials from infestation and/or destruction by microorganisms, **characterized in that** a biocidal composition according to any of Claims 1 to 9 is allowed to act on the microorganism or its habitat.

## Revendications

1. Composition biocide, contenant les composants :
(a) 2 % en poids à 20 % en poids d'une ou plusieurs isothiazolinones, choisies dans le groupe constitué par la méthylisothiazolin-3-one (MIT) et la 1,2-benzisothiazolin-3-one (BIT),
(b) 65 % en poids à 97 % en poids d'au moins un biocide, choisi dans le groupe du phénoxyéthanol, de l'alcool phénéthylique et du phénylpropanol et
(c) 5 % en poids à 10 % en poids d'eau.

2. Composition biocide selon la revendication 1, **caractérisée en ce que** celle-ci contient du phénoxyéthanol en tant que composant (b).

3. Composition biocide selon la revendication 1 ou 2, **caractérisée en ce que** celle-ci contient en outre en tant que composant
(d) 0,1 % en poids à 10 % en poids d'un ou plusieurs glycols, choisis dans le groupe constitué par le monoéthylèneglycol, le diéthylèneglycol, le triéthylèneglycol, le propylèneglycol, le tripropylèneglycol, le dipropylèneglycol et le mono-, di-, tri- et tétra-polyéthylèneglycol ainsi que leurs éthers de méthyle et de butyle.

4. Composition biocide selon la revendication 3, **caractérisée en ce qu'**elle contient du diéthylèneglycol en tant que composant (d).

5. Composition biocide selon l'une quelconque des revendications 1 à 4, **caractérisée en ce que** celle-ci contient seulement de la méthylisothiazolin-3-one (MIT) et de la 1,2-benzisothiazolin-3-one (BIT) en tant qu'isothiazolinone.

6. Composition biocide selon l'une quelconque des revendications 1 à 5, **caractérisée en ce que** celle-ci contient 7,5 % en poids à 10 % en poids d'eau en tant que composant (c).

7. Composition biocide selon l'une quelconque des revendications 1 à 6, **caractérisée en ce que** celle-ci contient la méthylisothiazolin-3-one (MIT) et la 1,2-benzisothiazolin-3-one (BIT) en un rapport de 1:3 à 3:1.

8. Composition biocide selon l'une quelconque des revendications 1 à 7, **caractérisée en ce que** celle-ci est constituée des ingrédients suivants :
(aa) 2 % en poids de méthylisothiazoline-3-one,
(ab) 2 % en poids de 1,2-benzisothiazolin-3-one,
(b) 87 % en poids de phénoxyéthanol et
(c) 9 % en poids d'eau.

9. Utilisation d'une composition biocide selon l'une quelconque des revendications 1 à 8 pour la protection de matériaux techniques, contre l'infestation par des micro-organismes et pour la lutte non thérapeutique contre des micro-organismes.

10. Procédé pour la protection de matériaux techniques contre l'infestation et/ou la destruction par des micro-organismes, **caractérisé en ce qu'**on laisse agir une composition biocide selon l'une quelconque des revendications 1 à 9 sur le micro-organisme ou sur son lieu de vie.
